# EUROPEAN PATENT APPLICATION

(11) **EP 3 742 321 A1**
(43) Date of publication of application: **25.11.2020**
(21) Application number: 19175897.8
(22) Date of filing: 22.05.2019
(51) Int. Cl.: G06F 21/64, H04L 29/08

(54) **STORAGE OF MEASUREMENT DATASETS AND DISTRIBUTED DATABASES**

(71) Applicant: Siemens Aktiengesellschaft, 80333 München (DE)
(72) Inventor: Bölderl-Ermel, Wolfgang, 90530 Wendelstein (DE); Bömoser, Stefan, 91522 Ansbach (DE); Ermler, Rene, 91058 Erlangen (DE); Kepka, Alexander, 90427 Nürnberg (DE); Riedl, Wolfgang, 90443 Nürnberg (DE); Seidl, Joachim, 92237 Sulzbach-Rosenberg (DE)

(57) **Abstract**

A measurement dataset (210) indicative of operational characteristics of an industrial field device (199) is obtained. Based on the measurement dataset (210), a performance indicator dataset (205) comprising one or more figures of merit (221-224) of the operational characteristics is determined and storage of the performance indicator dataset (205) in a distributed database (159) and storage of the measurement dataset (210) in a non-distributed database (172) is triggered.

## Description

### TECHNICAL FIELD

Various examples of the invention generally relate to techniques of storing measurement datasets. Various examples of the invention specifically relate to storage of a measurement dataset in a non-distributed database and storage of a performance indicator dataset that is associated with the measurement dataset in a distributed database.

### BACKGROUND

Distributed databases - such as the Blockchain - offer increased security against manipulation of data. Thus, various functionality - e.g., sense and control functionality in industrial environments, control of electrical grids, transport systems, etc. - sometimes relies on data stored in a distributed database.

Distributed databases are generally distributed across and replicated across multiple nodes of a corresponding distributed database infrastructure. Therefore, it has been found that storing a large amount of data can require significant computational resources such as communication bandwidth and memory, etc.

Once data has been stored in a distributed database, it is often difficult to remove the data. For example, if the distributed database is implemented in a Blockchain, then the chaining checksums of the sequence of blocks of the Blockchain require that any data once included in the Blockchain remains stored in the Blockchain.

According to reference implementations, such problems have been addressed by storing data off-chain, i.e., not in the Blockchain; and storing a link to the data, e.g., a hash value of the data, on-chain, i.e., in the Blockchain. In such a scenario, modification of the data that is stored off-chain could be detected, because the hash value - securely stored in the Blockchain - would be different from the further hash value determined based on the modified/manipulated off-chain data.

However, such reference implementations face certain restrictions and drawbacks. For example, such reference implementations may not be easily applied to a smart contract. A smart contract is program code that is implemented on the Blockchain. The program code can implement certain logic functionality and can be invoked by mining nodes of the Blockchain infrastructure. In particular, in scenarios in which a smart contract is used, it is often required that the data is accessible by the smart contract.

### SUMMARY

Therefore, a need exists for advanced techniques of storing data in a distributed database. In particular, a need exists for techniques which overcome or mitigate at least some of the above-identified restrictions and drawbacks.

A node includes a control circuitry. The control circuitry is configured to obtain a measurement dataset. The measurement dataset is indicative of operational characteristics of an industrial field device. The control circuitry is also configured to determine a performance indicator dataset based on the measurement dataset. The performance indicator dataset includes one or more figures of merit of the operational characteristics. The control circuitry is also configured to trigger storage of the performance indicator dataset in a distributed database. The control circuitry is also configured to trigger storage of the measurement dataset in a non-distributed database.

A computer-implemented method includes obtaining a measurement dataset. The measurement dataset is indicative of operational characteristics of an industrial field device. The method also includes determining a performance indicator dataset based on the measurement dataset. The performance indicator dataset includes one or more figures of merit of the operational characteristics. The method also includes triggering storage of the performance indicator dataset in the distributed database, and storage of the measurement dataset in a non-distributed database.

A computer program or a computer-program product or a computer-readable storage medium includes program code that can be executed by least one processor. When executing the program code, the processor performs a method. The method includes obtaining a measurement dataset. The measurement dataset is indicative of operational characteristics of an industrial field device. The method also includes determining a performance indicator dataset based on the measurement dataset. The performance indicator dataset includes one or more figures of merit of the operational characteristics. The method also includes triggering storage of the performance indicator dataset in the distributed database, and storage of the measurement dataset in a non-distributed database.

A mining node of a distributed database infrastructure includes control circuitry. The control circuitry is configured to receive a transaction including a measurement dataset. The measurement dataset is indicative of operational characteristics of an industrial field device. The transaction also includes a performance indicator dataset. The performance indicator dataset comprises one or more figures of merit of the operational characteristics. The control circuitry is further configured to split the transaction into a first action and into a second section. The first section comprises the performance indicator dataset and the second section comprises the measurement dataset. The performance indicator dataset is stored in the distributed database of the distributed database infrastructure, based on the first section. The measurement dataset is transmitted to a non-distributed database based on the second section.

A computer-implemented method includes receiving a transaction. The transaction includes a measurement dataset and further includes a performance indicator dataset. The measurement dataset is indicative of operational characteristics of an industrial field device. The performance indicator dataset includes one or more figures of merit of the operational characteristics. The method includes splitting the transaction into a first section and a second section. The first section includes the performance indicator dataset; and the second section includes a measurement dataset. The method also includes storing the performance indicator dataset in the distributed database based on the first section. The method further includes transmitting the measurement dataset to a non-distributed database based on the second section.

A computer program or a computer-program product or a computer-readable storage medium includes program code that can be executed by least one processor. When executing the program code, the processor performs a method. The method includes receiving a transaction. The transaction includes a measurement dataset and further includes a performance indicator dataset. The measurement dataset is indicative of operational characteristics of an industrial field device. The performance indicator dataset includes one or more figures of merit of the operational characteristics. The method includes splitting the transaction into a first section and a second section. The first section includes the performance indicator dataset; and the second section includes a measurement dataset. The method also includes storing the performance indicator dataset in the distributed database based on the first section. The method further includes transmitting the measurement dataset to a non-distributed database based on the second section.

A node includes a control circuitry. The control circuitry is configured to obtain a performance indicator dataset from a distributed database. The performance indicator dataset includes one or more figures of merit of operational characteristics of an industrial field device. The performance indicator dataset is stored in the distributed database with a cross-reference to a measurement dataset. The control circuitry is also configured to obtain the measurement dataset from a non-distributed database, based on the cross-reference. Then, the control circuitry is configured to perform a comparison between the measurement dataset and the performance indicator dataset, to test an integrity of the performance indicator dataset end of the measurement dataset.

A computer-implemented method includes obtaining a performance indicator dataset from a distributed database. The performance indicator dataset include one or more figures of merit of operational characteristics of an industrial field device. The performance indicator dataset is stored in the distributed database with a cross-reference to a measurement dataset. The method also includes obtaining, from a non-distributed database, the measurement dataset based on the cross-reference. The method further includes performing a comparison between the measurement dataset and the performance indicator dataset, to test an integrity of the performance indicator dataset end of the measurement dataset.

A computer program or a computer-program product or a computer-readable storage medium includes program code that can be executed by least one processor. When executing the program code, the processor performs a method. The method includes obtaining a performance indicator dataset from a distributed database. The performance indicator dataset include one or more figures of merit of operational characteristics of an industrial field device. The performance indicator dataset is stored in the distributed database with a cross-reference to a measurement dataset. The method also includes obtaining, from a non-distributed database, the measurement dataset based on the cross-reference. The method further includes performing a comparison between the measurement dataset and the performance indicator dataset, to test an integrity of the performance indicator dataset end of the measurement dataset.

Unless explicitly stated otherwise the terms "perform", "calculate", "computer-implemented", "calculate", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory" or "memory unit" or "memory module" or the like can be implemented by a volatile memory in the form of random access memory (RAM) or a non-volatile memory such as a hard disc or data carrier.

The term "include" - specifically with respect to data and/or information - can relate to a (computer-implemented) storing of respective information or the respective date in a data structure/data set (which, e.g., in turn is also stored in a memory unit) in the context of the present disclosure.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the distributed database infrastructure (respectively of the corresponding infrastructure) in the context of the present disclosure.

A "smart-contract process" or "smart-contract functionality" can refer to the execution of program code, e.g., of a control instruction, in a process by means of the distributed database or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the distributed database. For example, if there is a need for an increased level of security, it would be possible to create and validate checksums on transaction level. For example, if a reduced level of security is required, then it would be possible to create and validate checksums on block level - e.g., across the entire block or only across a part of the data block and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the distributed database infrastructure testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a Blockchain indicates or references to a preceding data block of the Blockchain - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the Blockchain; to thereby chain a new data block with a (existing) data block of the Blockchain. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the Blockchain includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described.

The data - that is, e.g., stored in or written to a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the distributed database, a transaction checksum of a data block of the respective data, e.g., of the distributed database or of another database, or a data checksum determined across the data can be used.

In addition, the respective transaction can optionally include a link to or an indication of a memory position - e.g., an address of a file server and indications where the respective data are to be found on the file server, i.e., pertaining to off-chain storage; or an address of another distributed database which includes the data. The respective data could, e.g., also be provided in a further transaction of a further data block of the Blockchain - e.g., if the respective data and the associated checksums are included in different data blocks. It would also be possible that those data are provided via another communication channel - e.g., via another database and/or a cryptographically-secured communication channel.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain.

The term "security protected" can, specifically, relate to a protection that can be implemented by a cryptographic method. For example, this can be implemented by using a distributed database infrastructure for the providing or communication or transmitting of respective data/transactions. This can be implemented by a combination of the various checksums - e.g., cryptographic - , by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a distributed database infrastructure can include chaining of data blocks of a Blockchain. The term "chaining of data blocks" in the connection of the present disclosure can relate to the data blocks respectively including information (such as the chaining checksum) which links to another data block or multiple other data blocks [1], [4], [5].

Insertion of transactions into a distributed database can include saving the transactions in one or more data blocks of the Blockchain.

Insertion of transactions can include validating and/or confirming transactions.

The term "insertion of transactions into the distributed database" or "writing of data to the distributed database" and the like can relate to communicating a transaction or transactions or a data block including the transactions to one or more nodes of a distributed database infrastructure. If those transactions are successfully validated, e.g., by means of the one or more nodes, these transactions can be chained as a new data block with at least one existing data block [1], [4], [5]. For this, the respective transactions are stored in a new data block. In particular, this validating and/or chaining can be implemented by a trusted node, e.g., a mining node, a blockchain oracle or a blockchain platform.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the Blockchain.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving transactions in data blocks", "saving transaction" and the like can relate to a direct saving or indirect saving. A direct saving can relate to the respective data block of the Blockchain or the respective transaction of the Blockchain including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the distribute database".

A "program code" - such as a smart contract - can relate to a program instruction or multiple program instructions which are saved in one or more transactions, in connection with the present disclosure. The program code can be executable and can be executed, e.g., by the distributed database. This can be implemented, e.g., by a runtime environment, e.g., of a virtual machine, wherein the runtime environment or the program code are preferably Turing complete. The program code is preferably executed by the infrastructure of the distributed database [4], [5]. Here, a virtual machine is implemented by the infrastructure of the distributed database. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the distributed database - e.g., a blockchain -, e.g., in a data block. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "distributed database", can generally relate to a decentralized, distributed database, a blockchain, a distributed ledger, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereum-based implementation [1], [4], [5]. The term "distributed database" can also relate to a distributed database infrastructure that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words it is, in particular, not possible to propagate through or visit transactions or blocks or nodes of the graph backwards (i.e., opposite to the common unified direction). Acyclic means, in particular, that there are no loops or ring closures when traversing the graph. For example, a distributed database infrastructure can relate to a public distributed database infrastructure (e.g., a public blockchain) or a closed (private) distributed databased system (e.g., a private blockchain).

For example, in the case of a public distributed database infrastructure, the nodes and/or devices can join the distributed database infrastructure without proof of authorization or authentication or login credentials, respectively be accepted by the distributed database infrastructure without such information. In particular, in such a case the operator of the nodes and/or devices can remain anonymous.

For example, in the case of implementation of the distributed database infrastructure by a closed database system, new nodes and/or devices can require a valid proof of authorization and/or valid authentication information and/or valid credentials and/or valid login information to join the distributed database infrastructure or be accepted by the distribute database infrastructure.

A distributed database infrastructure can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a distributed database - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the distributed database. Thereby, it is possible to implement blockless distributed database infrastructure such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the distribute database, such that they are, in particular, saved in a secured manner. For this the transactions can be chained by means of a chaining checksum, e.g., by using a separate checksum or the transaction checksum of one or more transactions as chaining checksum, which is saved in a new transaction in the distributed database infrastructure when storing the new transaction in the distributed database. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the Blockchain" can relate, in connection with the present disclosure, e.g., to the data block of the Blockchain that is a direct predecessor of the (given) data block. Alternatively, the term "preceding data blocks of a (given) data block of the distribute database" can also relate to all data blocks of the Blockchain that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of an infrastructure of a distributed database", "mining node" and the like can relate, in the context of the present disclosure, to devices - e.g., mobile devices, wireless communication devices, computers, smartphones, clients or participants - that perform operations associated with the distributed database, e.g., a blockchain [1], [4], [5]. Such nodes can, e.g., execute transactions of a distributed database or the respective data blocks or can insert new data blocks including new transactions into the distributed database by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, that can also be nodes of the infrastructure of the distribute database. Thereby, the devices can be mobile devices or devices of the Internet of things that can also be nodes of the infrastructure of the distributed database. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods - , mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the distributed database infrastructure, i.e., do not execute operations of the distributed database or simply retrieve those without executing transactions, inserting data blocks or calculate proof of works. Alternatively, the term "computer" or "device" can also relate to a node of the infrastructure of the distributed database. In other words, a device can in particular implement a node of the distributed database infrastructure or a device outside of the blockchain and the distributed database, respectively. A device outside of the distributed database infrastructure can, e.g., access the data - e.g., the transactions or the control transactions - of the distributed database. A device outside of the distributed database infrastructure can be controlled by nodes - e.g., by means of smart contracts and/or blockchain oracles. For example, if a control of a device - e.g., a device implemented as a node or a device outside of the distributed database infrastructure - is implemented by a node, then this can occur via a smart contract which, in particular, is saved in a transaction of the distributed database.

### List of citations

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a system including a measurement node and a Blockchain infrastructure according to various examples.
FIG. 2 schematically illustrates a measurement dataset indicative of operational characteristics of an industrial field device and further indicates figures of merits of the operational characteristics according to various examples.
FIG. 3 schematically illustrates a performance indicator dataset including the figures of merits of the operational characteristics according to various examples.
FIG. 4 is a flowchart of a method according to various examples.
FIG. 5 is a flowchart of a method according to various examples.
FIG. 6 is a flowchart of a method according to various examples.
FIG. 7 is a functional flowchart of signaling between the various nodes of the system according to various examples.
FIG. 8 is a signaling diagram associated with FIG. 7 according to various examples.
FIG. 9 is a signaling diagram associated with FIG. 7 according to various examples.
FIG. 10 is a signaling diagram associated with FIG. 7 according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of storing data are described. The techniques described herein can be applied for various kinds and type of data. Various techniques will be described in connection with storing measurement datasets. Measurement datasets can be indicative of one or more observables of an event. For example, the event may be a software event or a physical event. For example, to obtain a measurement dataset that is indicative of one or more observables of a software event, a so-called software oracle could be used. The software oracle could track or monitor your content of a webpage, traffic on a communication line, the status of report messages issued by an IOT device, etc. For example, the event may be a physical event. To obtain a measurement dataset that is indicative of one or more observables of a physical event, a hardware oracle or sensor device could be used. The sensor device could measure, e.g., one or more of the following physical observables: light, pressure, temperature, current, voltage, humidity, etc.

As a general rule, a measurement dataset can include raw measurement data and/or processed measurement data. Raw measurement data can correspond to the output of the oracle or of the sensor device; while processed measurement data can correspond to the raw measurement data after some processing in accordance with a processing algorithm. There can be a tendency that processed measurement data is smaller if compared to the raw measurement data. To give an example: it would be possible that a 2-D stereo camera outputs to 2D images having pixels, each pixel having a certain color or brightness value. Then, this raw measurement data can be processed to, e.g., identify objects in the 2-D images using object recognition. The objects could be identified with a bounding box or position label and a category label indicative of the type of the object, e.g., vehicle, person, tree, etc. The processed measurement data could also include distances for the object obtained from a comparison of multiple 2-D images at a given frame. In such a scenario, the processed measurement data may be significantly smaller if compared to the raw measurement data. For example, a list of objects with associated categories and distances may be significantly smaller if compared to the set of pixels (e.g., a few megapixels), each pixel having a n-bit value indicating its brightness, etc. While the examples above have been described in connection with an implementation using a 2-D stereo camera as the source of the measurement dataset, the techniques described herein are not limited to such an example. Various other kinds and types of sources of the measurement dataset are conceivable.

More specifically, the measurement datasets as described herein can be indicative of operational characteristics of an industrial field device. I.e., the event for which observables are included in the measurement dataset can be associated with the operation of an industrial field device. Here, the type of the operational characteristics can depend on the type of industrial field device.

As a general rule, the techniques described herein can find application in various fields such as monitoring characteristics of electrical grids and microgrids, the industrial field devices pertaining to nodes of the grids or microgrids; monitoring characteristics of industrial field devices such as turbines, subsea equipment, medical equipment such as magnetic-resonance imaging or computer tomography; monitoring characteristics of vehicles such as trains or ships or airplanes; etc. Along with such different types of industrial field devices, also the measurement datasets vary.

Various techniques are based on the finding that for various kinds and types of measurement datasets it is possible to determine a performance indicator dataset. For example, where the measurement dataset is indicative of operational characteristics of an industrial field device, it is possible to determine the performance indicator dataset, wherein the performance indicator dataset includes one or more figures of merit of the operational characteristics. As such, the performance indicator dataset can correspond to processed measurement data. The figures of merit can summarize the operation of the industrial field device. The figures of merit can describe abnormalities of the operation. The figures of merit can describe average values of the operational characteristics.

The performance indicator dataset can be determined based on raw measurement data or further processed measurement data taking into consideration one or more operational constraints associated with the industrial field device. For example, depending on the particular type of industrial field device, different operational constraints can govern which information is significant for the performance of the industrial field device. To give an example: for a stereo camera, dead times in the refresh rate with which images are obtained from the image sensors can be a significant performance indicator; while, on the other hand, for a disc brake of a train car a spectral power density within a certain part of a vibrational spectrum can be a significant performance indicator. In other words, and more generally: the performance indicator dataset can be unique to the type of industrial field device and be associated with the operational characteristics of the industrial field device.

The performance indicator dataset can, typically, include human-understandable application-layer data regarding the operational characteristics of the industrial field device. I.e., processed information that can be directly output via a human-machine-interface may be included in the performance indicator dataset.

As a general rule, the performance indicator dataset can be smaller than the measurement dataset. The performance indicator dataset could condense or summarize information generally included in the measurement dataset. For example, determining the performance indicator dataset can include applying a lowpass filter, identifying a maximum or minimum, detecting events in the measurement dataset, etc.

To give a few examples, the wherein the performance indicator dataset could include at least one of the following: time-averaged data samples of the measurement dataset; peak data samples of the measurement dataset; event characteristics of the measurement dataset; or
time-averaged use characteristics of the industrial field device.

Various techniques employ a distributed database for storing data associated with industrial field devices. In particular, various techniques employ a Blockchain for implementing the distributed database. While various techniques will be described in connection with a scenario in which the distributed database is implemented by a Blockchain, similar techniques may be applied for other kinds and types of distributed databases, e.g., blockless databases, a DLTS, etc.

According to various examples, it is possible to facilitate on-chain storage - i.e., storage on the Blockchain or another distributed database - of a performance indicator dataset that is associated with a measurement dataset. According to various examples, it is possible to facilitate off-chain storage of the measurement dataset - i.e., storage on a non-distributed database. The performance indicator dataset and the measurement dataset can be stored in a cross-referenced manner.

The measurement dataset does not need to be stored on-chain. Since typically the measurement dataset is comparably large in size, not having to store the measurement dataset on-chain helps to relax computational requirements imposed on the Blockchain infrastructure. At the same time, by storing the performance indicator dataset on-chain, a high security against manipulation can be provided. For example, if the measurement dataset was manipulated, this manipulation would most likely also result in a change of the performance indicator dataset (or else the manipulation would be insignificant). This could help to identify the manipulation by comparing the corresponding performance indicator dataset against the performance indicator dataset stored on-chain.

As a general rule, it would be possible to separate/split the performance indicator dataset from the measurement dataset at a mining node of the Blockchain infrastructure. Thus, the mining node could implement switch-point functionality, either routing the performance indicator dataset to the on-chain storage in the Blockchain, or routing the measurement dataset to an off-chain storage to a non-Blockchain database.

The techniques described herein facilitate compatibility with existing Blockchain functionality, in particular with existing smart contract-based functionality. For example, it would be possible that a mining node of the Blockchain infrastructure receives a transaction that includes, both, the measurement dataset, as well as the performance indicator dataset. Then, the mining node could separate the performance indicator dataset and the measurement dataset. A transaction checksum or block checksum or chaining checksum used for the Blockchain could be based on the performance indicator dataset, but not on the measurement dataset.

The integrity and authenticity of the measurement dataset that is stored off-chain can be ensured. For example, an optional signature can be included in the transaction. The integrity can then be checked based on the signature - e.g., using a public-private-key pair - by means of a smart contract implemented in the Blockchain infrastructure. This could also be implemented by a client node.

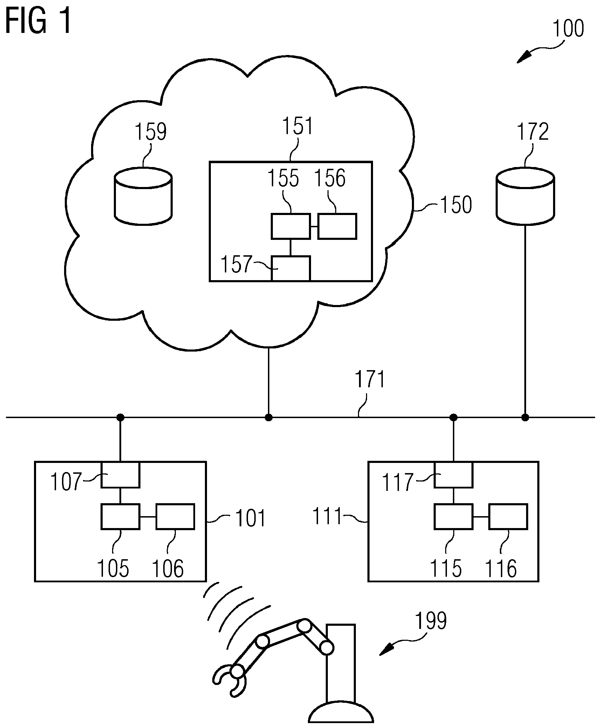

FIG. 1 schematically illustrates a system 100.

The system 100 includes a measurement node 101. The measurement node 101 includes a processor 105 and a memory 106, forming a control circuitry. The measurement node 101 also includes a communication interface 107 that is connected to a communication network 171, e.g., the Internet. The measurement node 101 can implement oracle functionality. For example, the measurement node 101 could implement a hardware oracle and/or a software oracle. For example, the measurement node 101 could include or be otherwise coupled to a sensor device. The sensor device could obtain raw measurement data indicative of one or more physical observables of an event associated with an industrial field device 199 (as schematically illustrated in FIG. 1).

The system 100 also includes a Blockchain infrastructure 150. The Blockchain infrastructure 150 includes multiple mining nodes, wherein FIG. 1, for sake of simplicity, only a single mining node 151 is illustrated. Any further mining nodes can be configured in accordance with the configuration of the mining node 151 illustrated in FIG. 1. The mining node 151 includes a processor 155 and a memory 156. The processor 155 and the memory 156 implement a control circuitry. The mining node 151 also includes a communication interface 157 via which the processor 155 can communicate with the communication network 171, e.g., to exchange data with the measurement node 101 or a third-party node 111.

The system 100 also includes the third-party node 111. The node 111 includes a processor 115 and a memory 116. The processor 115 and the memory 116 implement a control circuitry. The node 111 also includes a communication interface 117. The processor 115 can communicate with the communication network 171 via the communication interface 117.

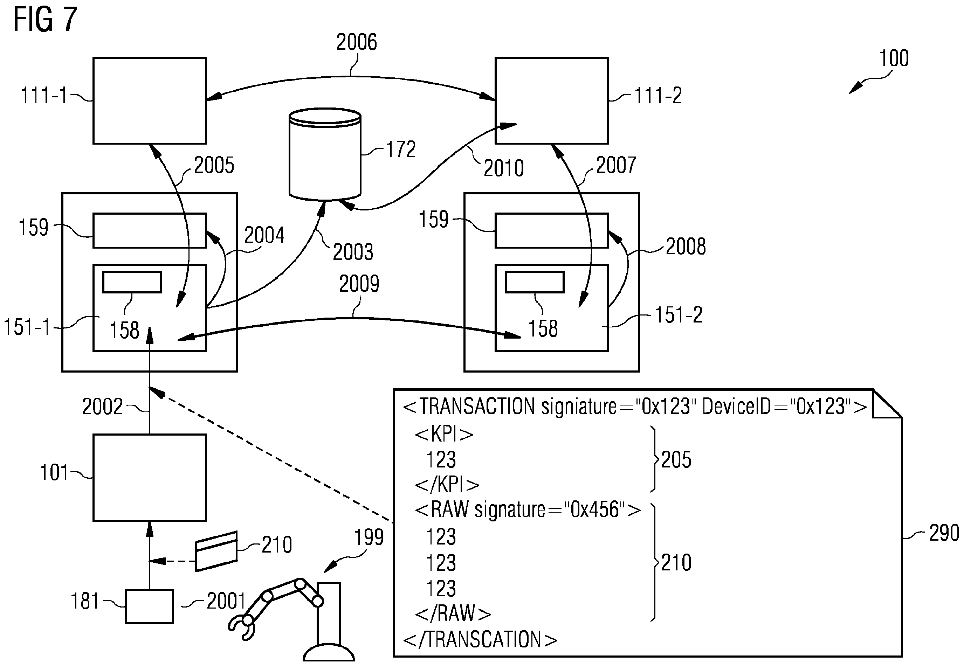

While in the example of FIG. 1 the system 100 only includes a single third-party node 111, and various examples it would be possible that the system 100 includes multiple third-party nodes, e.g., an operator node and a client node (not illustrated in FIG. 7).

As illustrated in FIG. 1, a Blockchain 159 is implemented in the Blockchain infrastructure 150. The system 100 also includes a non-distributed database 172. It is possible to implement on-chain storage of data using the Blockchain 159. It is possible to implement off-chain storage of data using the non-distributed database 172.

As a general rule, the non-distributed database 172 may operate without multiple replicates across different site. I.e., a centralized copy of the non-distributed database may be used for operational access. The non-distributed database 172 may not be implemented as a distributed ledger or Blockchain. The non-distributed database 172, thus, is different from the Blockchain 159.

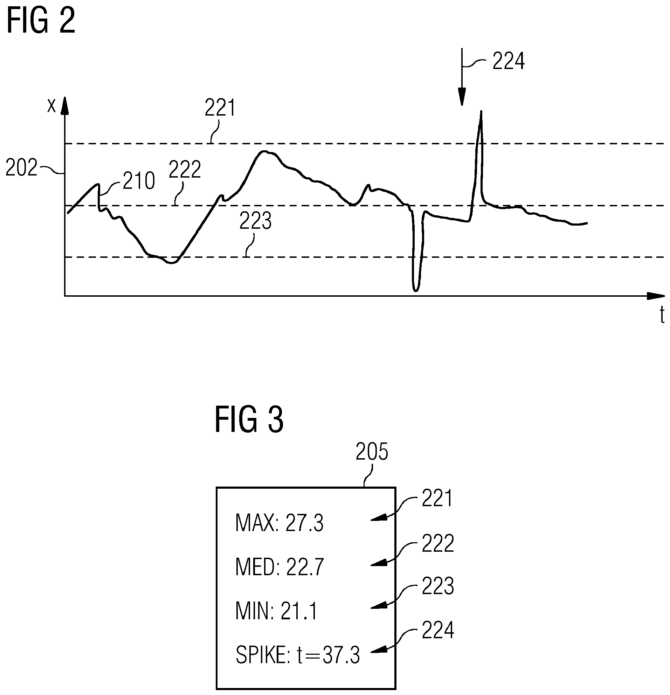

In particular, various scenarios pertain to storing a measurement dataset. Various scenarios also pertain to storing a performance indicator dataset that is associated with the measurement dataset. Details with respect to the measurement dataset in the performance indicator dataset are illustrated in connection with FIG. 2.

FIG. 2 schematically illustrates aspects associated with a measurement dataset 210. In the scenario FIG. 2, the measurement dataset 210 includes a time-series of raw data samples of a physical observable 202 as a function of time 201. The physical observable 202 monitors one or more operational characteristics of the industrial field device 199. For instance, the physical observable 202 could be indicative of a power consumption of the industrial field device 199. Therefore, the physical observable 202 - here, the power consumption - could correlate with the productivity, e.g., workpiece throughput in case of a robot arm as illustrated in FIG. 1 - as operational characteristic of the industrial field device 199.

FIG. 2 also schematically illustrates aspects of figures of merit of the operation of the industrial field device 199. The figures of merit include: a maximum value 221 of the physical observable 202 (in the example of FIG. 2 neglecting short-term spikes), a minimum value 223 of the physical observable 202 (in the example of FIG. 2, again, neglecting short-term spikes), a median value 222 of the physical observable 202, or event patterns 224 (in the example of FIG. 2, short-term spikes). FIG. 3 illustrates a corresponding performance indicator dataset 205 that includes such figures of merit 221-224.

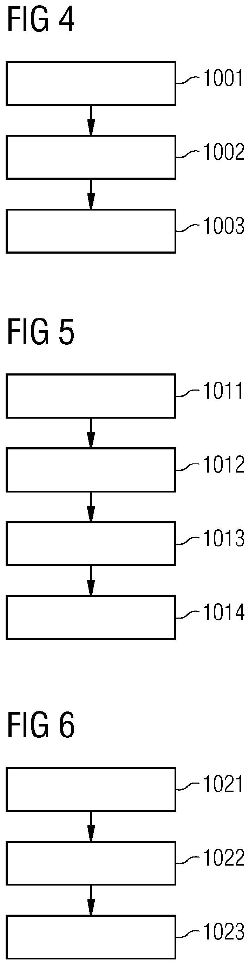

Next, details with respect to storing the measurement dataset 210 and the performance indicator dataset 205 are explained in connection with FIG. 4, FIG. 5, and FIG. 6.

FIG. 4 is a flowchart of a method according to various examples. For example, the method of FIG. 4 could be executed by the measurement node 101, e.g., by the processor 105 loading respective program code from the memory 106. It would also be possible that the method according to FIG. 4 is executed by the mining node 151 of the Blockchain infrastructure 150, e.g., by the processor 155 upon loading program code from the memory 156. In some examples, parts of the method according to FIG. 4 could be executed by the measurement node 101 and other parts could be executed by the mining node 151.

In box 1001, a measurement dataset is obtained. The measurement dataset is indicative of one or more operational characteristics of an industrial field device. To give an example, the measurement dataset 210 according to the example of FIG. 2 could be obtained. For example, the measurement dataset could be received from one or more sensor devices. At least parts of the measurement dataset could be obtained from a software oracle.

Next, at blocks 1002, a performance indicator dataset is determined based on the measurement dataset of box 1001. To give an example, the performance indicator dataset 205 according to the example of FIG. 3 could be determined.

As a general rule, various options are available for determining the performance indicator dataset in box 1002. To give an example, it would be possible that the performance indicator dataset is determined using a performance metric algorithm. The performance metric algorithm can transform the measurement dataset into the performance indicator dataset. For example, the performance metric algorithm can be unique to the particular industrial field device or type of industrial field device. The performance metric algorithm can reduce the amount of data such that the data size of the measurement dataset is larger than the data size of the performance indicator dataset.

In box 1003, storage of the performance indicator dataset and storage of the measurement dataset is triggered. In particular, the performance indicator dataset is stored in a distributed database, e.g., on-chain in Blockchain 159 (cf FIG. 1); while the measurement dataset is stored in another database, in particular, a non-distributed database such as the database 172 (cf FIG. 1). Thus, the measurement dataset is stored off-chain.

Triggering storage in box 1003 can include, e.g., transmitting the measurement dataset to the non-distributed database. The non-distributed database can be accessed with a WRITE-request. Triggering storage in box 1003 can include, e.g., transmitting the performance indicator dataset to the Blockchain infrastructure 150, e.g., to an appropriate mining node and requesting storage in the Blockchain 159. Triggering storage in box 1003 can also include writing the performance indicator dataset to the Blockchain 159, e.g., appending a corresponding block to the Blockchain 159, e.g., including solving a proof of work or proof of stake algorithm.

According to various examples, it would also be possible that the performance metric algorithm that is used to determine the performance indicator dataset in box 1002 is stored. For example, it would be possible that box 1003 also includes triggering storage of the performance metric algorithm in the distributed database, e.g., in the Blockchain 159. For example, the performance metric algorithm and the performance indicator dataset could be stored cross-referenced with respect to each other.

According to various examples, the performance indicator dataset is determined by a node outside of the Blockchain infrastructure, e.g., by the measurement node 101 (cf FIG. 1). In such an example, it would be possible that certain functionality with respect to storing the performance indicator dataset on-chain and storing the measurement dataset off-chain is implemented by a node of the Blockchain infrastructure, e.g., by the mining node 151 (cf FIG. 1). Corresponding functionalities explained in connection with the example of FIG. 5.

FIG. 5 is a flowchart of a method according to various examples. For example, the method of FIG. 5 could be executed by a mining node of a Blockchain infrastructure, e.g., by the processor 155 of the mining node 151, e.g., upon loading corresponding program code from the memory 156 (cf FIG. 1).

In box 1011, a transaction is received, e.g., from a measurement node such as the measurement node 101. The transactions includes a measurement dataset such as the measurement dataset 210. The transaction also includes a performance indicator dataset such as the performance indicator dataset 205 (cf FIG. 3).

Next, in box 1012, the transaction is split into a first action and a second section. The first section includes the performance indicator dataset; while the second section includes the measurement dataset.

Then, the performance indicator dataset is stored in the distributed database, e.g., the Blockchain 159, using the first section of the transaction; box 1013. Differently, in box 1014, the measurement dataset is transmitted to the non-distributed database, e.g., to the database 172, using the second section. Thus, switch-point functionality is implemented.

By storing the performance indicator dataset on-chain, manipulation thereof is prevented or made difficult. By storing the measurement dataset off-chain, it is possible to reduce computational resources required at the Blockchain infrastructure 150.

Furthermore, by implementing a splitting of the transaction at the mining node, the transaction can be determined by the measurement node using conventional techniques. Compatibility is provided for. For example, smart contracts can operate on the transaction using both the measurement dataset, as well as the performance indicator dataset, before the transaction is being split into multiple parts; therefore, existing logic operating based on the transaction can be reused.

By storing the measurement dataset and the performance indicator dataset with a cross-reference, the integrity of the performance indicator dataset and/or of the measurement dataset can be check. Details with respect to checking the integrity of the measurement dataset are explained next in connection with FIG. 6.

FIG. 6 is a flowchart of a method according to various examples. For example, the method of FIG. 6 could be executed by a third-party node, e.g., by the third-party node 111 and more specifically could be executed by the processor 115 upon loading respective program code from the memory 116.

At box 1021, a performance indicator dataset is obtained from a distributed database. For example, the performance indicator dataset 205 could be obtained from the Blockchain 159. The performance indicator dataset 205 could be obtained, e.g., by using a checksum an associated transaction that includes the performance indicator dataset 205 (cf. FIG. 5: box 1011) .

At box 1021, a measurement dataset is obtained from a non-distributed database. For example, the measurement dataset 210 could be obtained from the non-distributed database 172. The measurement dataset 210 could be obtained based on a cross-reference stored along with the performance indicator dataset 205 in the distributed database.

Then, at box 1023, a comparison between the measurement dataset and the performance indicator dataset is performed. This allows to test the integrity of the performance indicator dataset and of the measurement dataset. For example, if one or more of the performance indicator dataset of the measurement dataset would have been manipulated, then the comparison would yield a non-match.

For example, as part of box 1023, it would be possible to determine a reference performance indicator dataset based on the measurement dataset obtained in box 1022. In particular, this can be done using a performance metric algorithm. The performance metric algorithm can determine a rule set for deriving the (reference) performance indicator dataset from the measurement dataset. For example, the performance metric algorithm used in box 1023 could be stored in the distributed database, e.g., in the Blockchain 159. For example, the performance metric algorithm could be stored in the non-distributed database with the cross-reference to the performance indicator dataset obtained in box 1021 and/or with the cross-reference to the measurement dataset obtained in box 1022. By storing the performance metric algorithm in the distributed database, manipulation of the comparison in box 1023 can be avoided. In particular, the reference performance metric dataset can be compared against the performance metric dataset 205, and thereby manipulation of the performance metric dataset 205 could be identified.

Next, a specific example implementation of the methods of FIG. 4, FIG. 5, in FIG. 6 will be described in connection with the architecture of the system 100 illustrated in FIG. 7.

FIG. 7 is a functional flowchart illustrating the interaction between the nodes of the system 100. The system 100 according to FIG. 7 essentially correspond to the FIG. 100 according to FIG. 1.

At 2001, a sensor device 181 provides the measurement dataset 210 to the measurement node 101. The measurement dataset 210 is indicative of one or more operational characteristics of the industrial field device 199. The measurement node 101 has a unique identity (the unique identity is labeled "DeviceID" in FIG. 7) and is registered based on this identity to the Blockchain infrastructure 150. According to various examples, the measurement node 101 has a cryptographic keying material associated with the unique identity. For example, the cryptographic keying material can be used to determine a signature of the measurement data 210 or other data. For example, the cryptographic keying material can include a public key and a private key.

At 2001, the measurement node 101 determines a signature of the measurement dataset 210 in at least some examples using the cryptographic keying material, e.g., a private key. As will be appreciated, the measurement dataset 210 is signed close to its origin, i.e., close to the sensor device 181 and prior to providing the measurement dataset 210 to the Blockchain infrastructure 150. Accordingly, manipulation of the measurement dataset 210 could be detected, e.g., by checking the signature using the public key.

As a general rule, while in the example of FIG. 7, the signature is determined for the measurement dataset 210, it would be possible - alternatively or additionally - to determine a signature of the performance indicator dataset 205 and/or a transaction including the measurement dataset and the performance indicator dataset 205.

At 2002, the measurement node 101 determines a transaction 290 that includes the measurement dataset 210 (the measurement dataset is labeled "RAW" in the FIG. 7) and the performance indicator dataset 205 (the performance indicator dataset is labelled "KPI" in FIG. 7). A header of the transaction 290 includes the unique identity 451 ("DeviceID"). The performance indicator dataset 205 serves as a proof of the operation of the industrial field device 199 in that it includes one or more figures of merit 221-224 of the operational characteristics of the industrial field device 199.

The measurement dataset 210 included in the transaction 290 serves to protect the integrity of the performance indicator dataset 205. For example, if the integrity of the performance indicator dataset 205 is challenged, the integrity can be validated using the measurement dataset 210. For example, the measurement dataset 210 can include raw data points indicative of, e.g., a current consumption of the industrial field device 199, production numbers of products fabricated using the industrial field device 199, positioning data or trace information of the movable parts of the industrial field device 199. The performance indicator dataset 205 can condense/concentrate or summarize the measurement dataset 210.

This is done using a performance metric algorithm. The performance metric algorithm can operate event-driven.

The transaction 290 includes a respective signature (labelled "TRANSACTION signature" in FIG. 7). This helps to avoid manipulation of the measurement dataset 210 and of the performance indicator dataset 205. As illustrated in FIG. 7, the measurement dataset 210 includes a respective signature ("RAW signature" in FIG. 7). This helps to split-off the measurement dataset 210 along with the signature from the remaining sections of the transaction 290, later on.

At 2002, the transaction 290 is transmitted by the measurement node 101 to the Blockchain infrastructure 150 and received by the mining node 151-1. The mining node 151-1 can check the validity of the transaction 290 using the smart contract 158. This can include checking the signature of the transaction 290 and optionally checking the signature of the measurement dataset 210. More generally speaking, checking the validity of the transaction 290 can include determining an integrity of the measurement dataset 210 based on the signature of the transaction 290 included in the transaction 290 and/or the signature of the measurement dataset 210. It would then be possible to selectively store the performance indicator dataset 205 in the Blockchain 159 if there is a successful outcome of the integrity check.

In case of a successfully verified transaction 290, including, in particular, a successfully checked integrity of the measurement dataset 210, it is then possible to proceed by, firstly, splitting the transaction 290 into a first section and into a second section. The first section includes the performance indicator dataset 205; while the second section includes the measurement dataset 210.

The measurement dataset 210 included in the first section has already been signed by the measurement node 101. The first section includes the measurement dataset 210 and the corresponding signature. Thus, the mining node 151-1 does not have to process the second section any further which generally reduces the computational resources required in handling the transaction 290. The mining node 151-1, at 2003, thus transmits the second section including the measurement dataset 210 and its signature to the database 172 for storage.

The mining node 151-1 can also write the second section to the Blockchain 159 at 2004, to store the performance indicator dataset 205 on-chain. For example, the mining node 151-1 can append a new block to the Blockchain 159 at 2004, the new block including the first section of the transaction 290. It would be possible that the performance indicator dataset 205 is signed, e.g., by the measurement node 101 or the mining node 151-1 determining the corresponding signature; then, the first section of the transaction 290 appended to the Blockchain in a new block can also include the corresponding signature of the performance indicator dataset 205.

Based on such techniques it is then possible to determine a report on the operation of the industrial field device 199. For example, such report may include information on the performance of the operation of the industrial field device 199 and/or information on the maintenance date or operational state of the industrial field device 199, and/or information on consumed resources by the industrial field device 199, that may be used, e.g., on pay-per-use scenarios. The operator node 111-1 may request a respective report message at the Blockchain infrastructure 150.

At 2005, the mining node 151-1 transmits a respective report message to the operator node 111-1. The report message can include the performance indicator dataset 205 that is stored in the Blockchain 159. The report message can optionally include an output of the smart contract 158 that has performed the validity check including determining the integrity of the measurement dataset 210.

At 2006, the operator node 111-1 can forward the report message received at 2005 to a client node 111-2. The report message can include a checksum of the measurement dataset 210. In some examples, the checksum of the measurement dataset 210 can provide an index value to address the measurement dataset 210 in the database 172.

As a general rule, it would be possible that the measurement dataset 210 and the performance indicator dataset 205 are stored cross-referenced with respect to each other in the database 172 and the Blockchain 159, respectively, using the checksum of the measurement dataset 210 and/or a checksum of the performance indicator dataset 205.

Sometimes, the client node 111-2 may wish to verify the performance indicator dataset 205 as provided in a report message at 2006 by the operator node 111-1. To do so, the client node 111-2 can request, at 2007, the performance indicator dataset 205 at the Blockchain infrastructure 150, in the scenario of FIG. 7 at the mining node 151-2. This request can be based on a checksum of the measurement dataset 210 and/or a checksum of the performance indicator dataset 205. It would be possible that a request message transmitted at 2007 by the client node 111-2 to the Blockchain infrastructure 150 includes the unique identity 451 of the measurement node 101, the performance indicator dataset 205, a checksum of the measurement dataset 210, and a signature of the measurement dataset 210. The checksum of the measurement dataset 210 can be used to address the measurement dataset 210 in the database 172. The signature of the measurement dataset 210 can help to identify manipulation of the measurement dataset 210 at the processing string prior to the Blockchain infrastructure 150.

At 2008, the mining node 151-2 can then retrieve the performance indicator dataset 205 from the Blockchain 159 (a local copy of the Blockchain 159 is stored at, both, the mining node 151-1 and the mining node 151-2, using conventional techniques of Blockchain synchronization at 2009). The mining node 151-2 can transmit the correspondingly retrieved performance indicator dataset 205 to the client node 111-2 and the client node 111-2 can perform a comparison between this instance of the performance indicator dataset 205 and the further instance of the performance indicator dataset 205 received at 2006. Manipulation of the performance indicator dataset 205 by the operator node 111-1 could thereby be identified.

Sometimes, the correctness of the performance indicator dataset 205 itself may be questionable. In such a scenario, the client node 111-2, at 2010, can receive - e.g., in response to a corresponding request - the measurement dataset 210 from the database 172. This can be based, e.g., the checksum of the measurement dataset 210 and/or a checksum of the corresponding performance indicator dataset 205. More generally speaking, the measurement dataset 210 and the performance indicator dataset 205 can be stored cross-referenced in the database 172 and the Blockchain 159, respectively. I.e., a respective cross-reference can be used to read the measurement dataset 210.

The measurement dataset 210 stored in the database 172 is secured by the two-layer digital signature, i.e., the signature of the measurement dataset 210 and the signature of the transaction 290.

Once the measurement dataset 210 is available at the client node 111-2, the client node 111-2 can determine a reference performance indicator dataset based on the measurement dataset 210 and compare the reference performance indicator dataset with the performance indicator dataset included in the report message received at 2006.

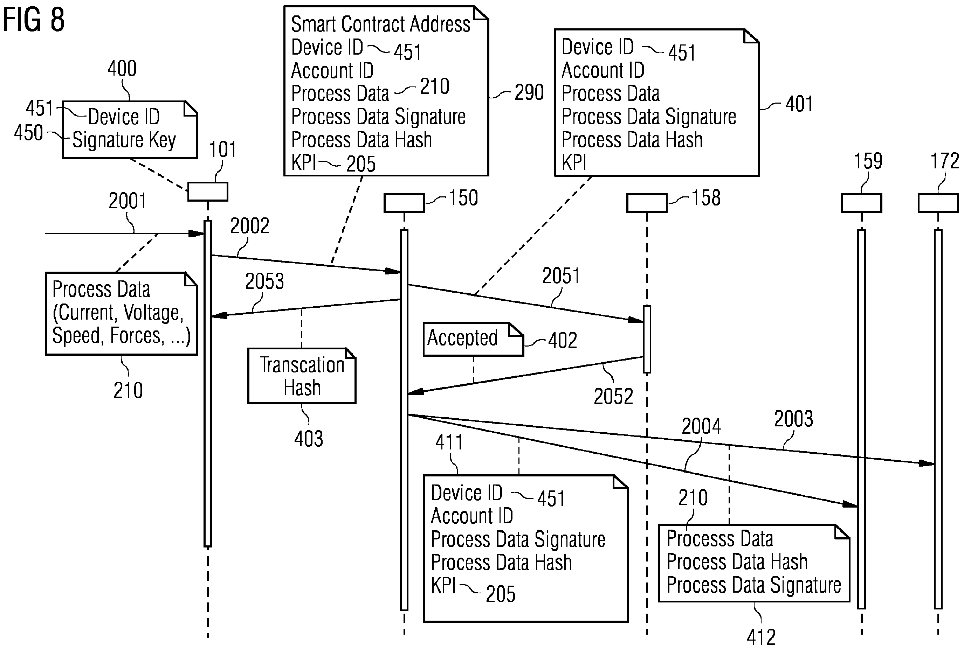

The operation of the system 100 according to the example of FIG. 7 is explained in further detail in connection with FIG. 8, FIG. 9, and FIG. 10.

In FIG. 8, at 2001, the measurement dataset 210 is received at the measurement node 101. The measurement node 101 is in possession of a cryptographic keying material 450 and is associated with a corresponding unique identity 451. Both can be stored in a respective control data 400 at the measurement node 101.

The measurement node 101 then determines the transaction 290. The transaction 290 is transmitted by the measurement node 101, at 2002, to the Blockchain infrastructure 150, more specifically to one or more mining nodes 151, 151-1, 151-2.

The transaction 290 includes an address of a smart contract 158 used to check its integrity; the unique identity 451 of the measurement node 101; optionally an account identity associated with the measurement node 101; the measurement dataset 210; a signature of the measurement dataset 210; a checksum of the measurement dataset 210; and the performance indicator dataset 205.

At 2051, based on the address of the smart contract 158 included in the transaction 290, corresponding data 401 is transmitted to the smart contract 158 and there checked for validity. The respective functionality of the smart contract 158 is executed.

The result 402 of the validity check - here, a positive result - is provided back by the smart contract 158, at 2052.

At 2053, the Blockchain infrastructure 150 optionally reports the checksum 403 of the transaction 290 to the measurement node 101.

At 2003, the second section 412 of the transaction 290 is provided by the Blockchain infrastructure 150 to the database 172, for off-chain storage. The second section 412 includes the measurement dataset 210, the checksum of the measurement dataset 210, and the signature of the measurement dataset 210. The second section 412 could also include the transaction checksum 403.

The first section 411 of the transaction 290 is stored in the Blockchain 159 at 2004. The first section 411 includes the unique identity of the measurement node 101; optionally the account identity; the signature of the measurement data 210; the checksum of the measurement data 210; and the performance indicator dataset 205. The first section 411 may optionally include the checksum 403 of the transaction 290.

As will be appreciated, the checksum of the measurement dataset 210 is stored in, both, the Blockchain 159, as well as the database 172 and, thus, helps to cross-reference the measurement dataset 210 and the performance indicator dataset 205.

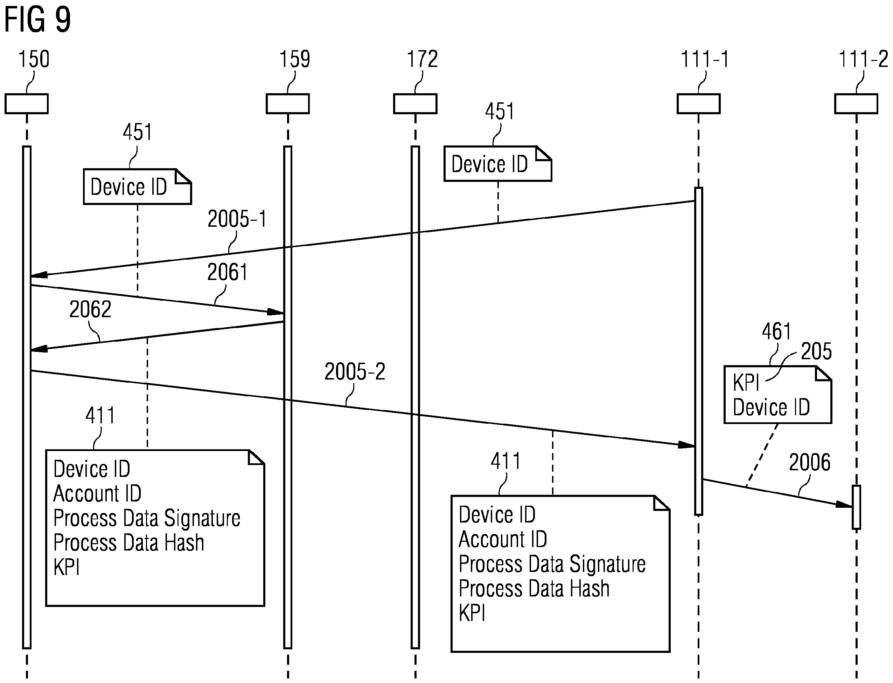

Turning to FIG. 9, at 2005-1, the operator node 111-1 requests at the Blockchain infrastructure 150 - e.g., at one of the mining nodes 151, 151-1, 151-2 - a report. In the example of FIG. 9, this request is based on the unique identity 451 of the measurement node 101. As a general rule, the request could be based on other information, e.g., the checksum of the transaction 290 or the checksum of the measurement dataset 210.

Then, a respective query at the Blockchain 159 is implemented, at 2061. At 2062, the Blockchain 159 responds with the first section 411. At 2005-2, the first section 411 of the transaction 290 is provided to the operator node 111-1. The first section 411 implements the report.

The operator node 111-1 can then transmit, at 2006, a report 461 that includes the performance indicator dataset 205 and the unique identity 451 of the measurement node 101. The client node 111-2 can receive the report 461.

As will be appreciated from the above, the unique identity 451 can hence serve as a reference to the performance indicator dataset 205.

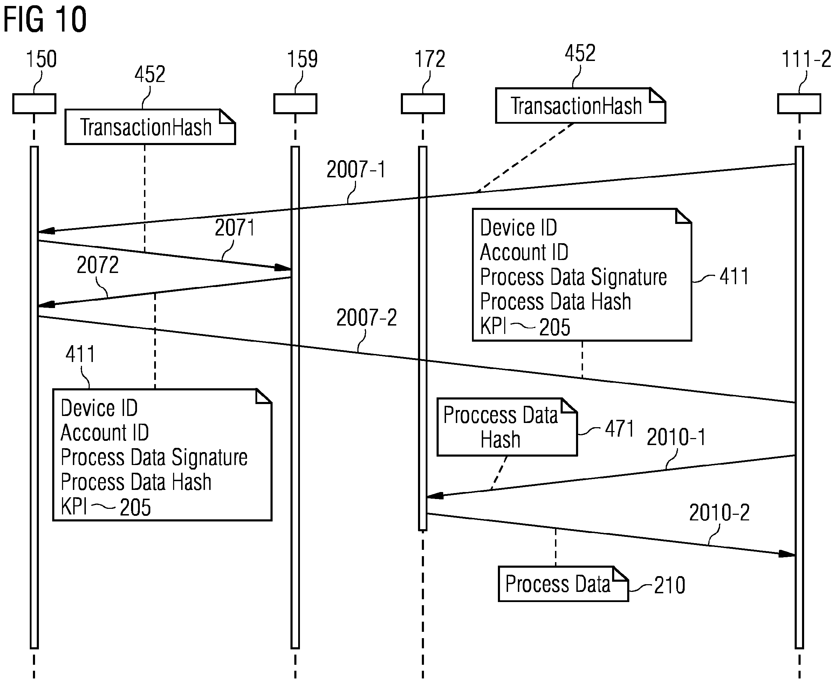

The client node 111-2 can then check whether the performance indicator dataset 205 provided at 2006 as part of the report 461 has been manipulated. This is illustrated in FIG. 10.

At 2007-1, the client node 111-2 transmits the transaction checksum 452 of the transaction 290 to the Blockchain infrastructure 150, e.g., to one of the mining nodes 151, 151-1, 151-2.

At 2071, 2072, the corresponding query/response at the Blockchain 159 is implemented, based on the transaction checksum 452. At 2072, the Blockchain 159 provides the first section 411 of the transaction 290 and, at 2007-2, the first section 411 is returned to the client node 111-2. The client node 111-2 can thus compare the performance indicator dataset 205 included in the first section 411 as obtained in 2007-to with the performance indicator dataset 205 included in the report 461 obtained in 2006 (cf. FIG. 9).

As will be appreciated, here, the transaction checksum 452 serves as the reference to the performance indicator dataset 205.

For example, in case of a discrepancy between the performance indicator datasets 205, at 2010-1, the client node 111-2 can transmit the checksum 471 of the measurement dataset 210 to the database 172 and, based on this query, receive at 2010-to the measurement dataset 210. It would then be possible that the client node 111-2 determines, based on the measurement dataset 210 as obtained in 2010-2, a reference performance indicator dataset and compares it with the performance indicator dataset 205 included in the first section 411 obtained at 2007-2.

As will be apricated, here the checksum 471 of the measurement dataset 210 serves as a reference to the measurement dataset 210.

Summarizing, techniques have been described which facilitate separating measurement datasets and performance indicator datasets from transactions for off-chain storage and on-chain storage, respectively. A checksum of a corresponding transaction is not destroyed by such splitting of the transaction. The authenticity of the source of the measurement dataset remains unchanged.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various techniques have been described in which a cross-reference between a measurement dataset stored off-chain and a performance indicator dataset stored on-chain is implemented by a checksum of the measurement dataset. In various examples, different cross-references can be used, e.g., a transaction checksum, a unique identity of a measurement node, etc.

For further illustration, various techniques have been described in which a measurement dataset is stored off-chain and a performance indicator dataset is stored on-chain. According to various examples, different kinds and type of data can be stored on-chain and off-chain, respectively. In particular, it can be generally possible to condense first data to human-readable second data and store the first data off-chain and store the second data on-chain.

For further illustration, various techniques have been described in which a Blockchain is used as a distributed database. Generally, it would be possible to implement different kinds and types of distributed databases, e.g., distributed ledgers, etc..

## Claims

1. A node (101, 151), comprising a control circuitry (105, 106, 155, 156) configured to:
- obtain a measurement dataset (210) indicative of operational characteristics of an industrial field device (199),
- based on the measurement dataset (210): determine a performance indicator dataset (205) comprising one or more figures of merit (221-224) of the operational characteristics, and
- trigger storage of the performance indicator dataset (205) in a distributed database (159) and storage of the measurement dataset (210) in a non-distributed database (172) .

2. The node (101, 151) of claim 1,
wherein said triggering of the storage comprises determining a transaction comprising the measurement dataset and the performance indicator dataset,
wherein the control circuitry is further configured to:
- determine a signature of at least one of the measurement dataset, or the performance indicator dataset, or the transaction using a cryptographic keying material (450).

3. The node (101, 151) of claim 1 or 2, wherein the control circuitry is configured to determine the performance indicator dataset (205) using a performance metric algorithm,
wherein the control circuitry is further configured to:
- triggering storage of the performance metric algorithm in the distributed database (159).

4. A node (151), wherein the node is a mining node of a distributed database infrastructure, comprising a control circuitry configured to:
- receive a transaction (290) comprising a measurement dataset (210) indicative of operational characteristics of an industrial field device (199) and further comprising a performance indicator dataset (205) comprising one or more figures of merit (221-224) of the operational characteristics,
- split the transaction (290) into a first section (411) and a second section (412), the first section comprising the performance indicator dataset and the second section comprising the measurement dataset,
- store the performance indicator dataset in a distributed database of the distributed database infrastructure based on the first section, and
- transmit the measurement dataset to a non-distributed database based on the second section.

5. The node of claim 4,
wherein the first section comprises a signature of the performance indicator dataset, and/or
wherein the second section comprises a signature of the measurement dataset.

6. The node of claim 4 or 5, wherein the control circuitry is further configured to:
- determine an integrity of the measurement dataset (210) based on at least one of a signature of the transaction (290) included in the transaction or a signature of the measurement dataset included in the transaction,
wherein the performance indicator dataset is selectively stored in the distributed database (159) based on said determining of the integrity.

7. The node of any one of the preceding claims,
wherein the performance indicator dataset and the measurement dataset are stored with a cross-reference (451, 452, 471) .

8. A node (111, 111-1, 111-2) comprising a control circuitry (115, 116) configured to:
- obtain, from a distributed database (159), a performance indicator dataset (205) comprising one or more figures of merit (221-224) of operational characteristics of an industrial field device (199), the performance indicator dataset being stored in the distributed database with a cross-reference to a measurement dataset (210),
- obtain, from a non-distributed database (172), the measurement dataset (210) based on the cross-reference, and
- perform a comparison between the measurement dataset (210) and the performance indicator dataset (205), to test an integrity of the performance indicator dataset and of the measurement dataset.

9. The node of claim 8, wherein the control circuitry (115, 116) is further configured to:
- determine a reference performance indicator dataset based on the measurement dataset and a performance metric algorithm stored in the distributed database.

10. The node of any one of the preceding claims,
wherein the performance indicator dataset comprises at least one of the following:
time-averaged data samples of the measurement dataset;
peak data samples of the measurement dataset;
event characteristics of the measurement dataset; or
time-averaged use characteristics of the industrial field device.

11. The node of any one of the preceding claims,
wherein the performance indicator dataset comprises human-understandable application-layer data.

12. A method, comprising:
- obtaining a measurement dataset which is indicative of operational characteristics of an industrial field device,
- based on the measurement dataset: determining a performance indicator dataset comprising one or more figures of merit of the operational characteristics,
- triggering storage of the performance indicator dataset (205) in a distributed database (159) and storage of the measurement dataset (210) in a non-distributed database (172) .

13. A method, comprising:
- receiving a transaction (290) comprising a measurement dataset (210) indicative of operational characteristics of an industrial field device (199) and further comprising a performance indicator dataset (205) comprising one or more figures of merit (221-224) of the operational characteristics,
- splitting the transaction into a first section and a second section, the first section comprising the performance indicator dataset and the second section comprising the measurement dataset,
- storing the performance indicator dataset in a distributed database based on the first section, and
- transmitting the measurement dataset to a non-distributed database based on the second section.

14. A method, comprising:
- obtaining, from a distributed database, a performance indicator dataset comprising one or more figures of merit of operational characteristics of an industrial field device, the performance indicator dataset being stored in the distributed database with a cross-reference to a measurement dataset,
- obtaining, from a non-distributed database, the measurement dataset,
- performing a comparison between the measurement dataset and the performance indicator dataset, to test an integrity of the performance indicator dataset and of the measurement dataset.
